# EUROPEAN PATENT SPECIFICATION

(11) **EP 2 946 946 B1**
(45) Date of publication and mention of the grant of the patent: **11.07.2018**
(21) Application number: 15167081.7
(22) Date of filing: 11.05.2015
(51) Int. Cl.: B60C 15/00, B60C 15/04

(54) **PNEUMATIC TIRE**
LUFTREIFEN
PNEUMATIQUE

(30) Priority: 19.05.2014 JP 2014103258
(43) Date of publication of application: 25.11.2015
(73) Proprietor: SUMITOMO RUBBER INDUSTRIES, LTD., Kobe-shi, Hyogo 651-0072 (JP)
(72) Inventor: Isaka, Wataru, Kobe-shi, Hyogo 651-0072 (JP)
(74) Representative: TBK

(56) References cited:
- WO-A1-2008/061544
- WO-A1-2010/034593
- FR-A1- 2 924 979
- JP-A- 2002 127 712
- JP-A- 2011 246 019

## Description

### Field of the Invention

The present invention relates to a pneumatic tire.

### Background Art

JP 2001-97010 A proposes a tire having a core that is set tall in a radial direction. Such a core contributes to enhancing the rigidity of the tire. Enhanced rigidity improves the steering stability of the tire. However, enhanced rigidity lowers riding comfort.

JP 2010-137637 A proposes a tire with a core where the radial height of the core is set to be lower than the height of the flange of a rim. By limiting the height of the core, the riding comfort of the tire is improved. However, the rigidity of the tire is lowered by the limited height of the core. Lowered rigidity reduces steering stability.

JP 2011 246019 A discloses the features of the preamble of claim 1.

WO 2010/034593 A discloses a pneumatic vehicle tire comprising two bead wires which are configured in the radially lower section of a tire sidewall, a carcass which is constituted of one or more carcass layers of parallel reinforcements and which extends from the bead wire of the first tire sidewall through the tire crown section to the bead wire of the second tire sidewall, a belt of one or more belt layers which extends in the tire crown section across the entire circumference of the tire and in the axial direction from tire shoulder to tire shoulder, and a profiled tread. A single rubber layer of a rubber material extends in the peripheral direction of the tire across the entire circumference of the tire while forming the tire surface on the inner side of the pneumatic vehicle tire and covers the carcass. Said rubber layer extends on the radial inner side of every bead wire axially outwards to the axial outer side of the tire and is designed so as to extend on the axial outer side of the tire while forming the tire surface towards radially outwards through the tire sidewall along the carcass while covering the carcass towards the axial outer side of the vehicle tire to the tire shoulder.

### PRIOR ART PUBLICATION

### PATENT PUBLICATION

Patent Publication 1: JP 2001-97010 A
Patent Publication 2: JP 2010-137637 A
Patent Publication 3: JP 2011 246019 A
Patent Publication 4: WO 2010/034593 A

### SUMMARY OF THE INVENTION

### PROBLEMS TO BE SOLVED BY THE INVENTION

As described above, it is not easy to enhance both the riding comfort and the steering stability of a pneumatic tire. The objective of the present invention is to provide a pneumatic tire that exhibits both excellent steering stability and riding comfort.

### SOLUTIONS TO THE PROBLEMS

The above-mentioned problem is solved by a pneumatic tire according to claim 1. Further advantageous developments are subject-matters of the dependent claims. A pneumatic tire according to one aspect of the present invention is provided with a pair of beads, a carcass and a belt. The carcass contains a carcass ply. The carcass ply is turned up around each bead from the axially inner side toward the outer side. The turn-up structure forms a main portion bridging one bead to the other bead and turn-up portions positioned on the axially outer side of the respective beads to extend in a radially outward direction. The beads each include a core containing a wire that extends in a circumferential direction. The number of strands in the core is at least two. The number of turns is at least three times the number of strands in the core. When the tire is mounted on a normal rim, the radially outer edge of the wire is positioned on the radially inner side of the radially outer edge of the flange of a normal rim. The outer-edge part of the turn-up portion overlaps the edge part of the belt. The distance between wires axially adjacent to each other at the radially inner edge of the core is set greater than the distance between wires axially adjacent to each other at the radially outer edge of the core.

The outer-edge part of the turn-up portion is preferred to be positioned on the radially inner side of the edge part of the belt.

The width where the outer-edge part of the turn-up portion overlaps the edge part of the belt is preferred to be at least 5 mm but no greater than 20 mm.

The inclination angle (θ1) of the core on its axially inner side and the inclination angle (θ2) of the core on its axially outer side are each preferred to be at least 50 degrees but no greater than 89 degrees to a cross section perpendicular with respect to a circumferential direction, i.e. to an axial center line of the tire.

The axial width of the core is preferred to decrease from the radially inner side toward the outer side.

The shape of the core on a cross section perpendicular with respect to a circumferential direction is preferred to be trapezoidal.

The number of strands on the radially inner side of the core is preferred to be set greater than the number of strands on the radially outer side of the core.

When the tire is mounted on a normal rim, the tire is preferred not to have a reinforcement-rubber layer that extends beyond the radially outer edge of the flange of the normal rim in a radially outward direction from the core.

### EFFECTS OF THE INVENTION

In the tire related to the present invention, steering stability is enhanced by combining the structures of the core and the carcass. Since the core is positioned on the radially inner side of the outer edge of the flange of a normal rim, riding comfort is not sacrificed. The tire related to the present invention exhibits excellent steering stability and riding comfort.

### BRIEF DESCRIPTION OF THE DRAWINGS

FIG. 1 is a cross-sectional view showing part of a motorcycle tire according to an embodiment of the present invention;
FIG. 2 is an enlarged cross-sectional view of the core of the tire in FIG. 1;
FIG. 3 is an enlarged cross-sectional view showing part of the tire in FIG. 1; and
FIG. 4 is an enlarged cross-sectional view showing another part of the tire in FIG. 1.

### DETAILED DESCRIPTION OF THE EMBODIMENTS

In the following, preferred embodiments of the present invention are described in detail with reference to the accompanying drawings when applicable.

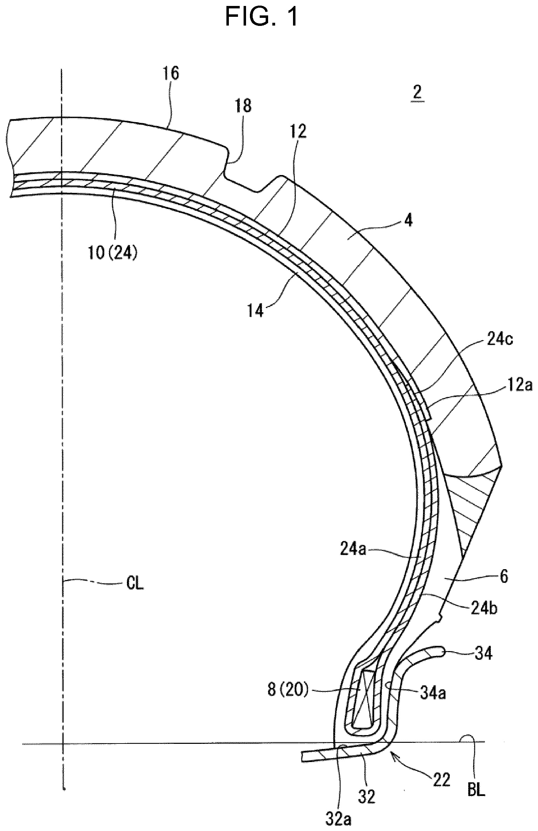

FIG. 1 is a cross-sectional view showing part of tire 2 according to an embodiment of the present invention. Tire 2 is mounted on a motorcycle. In FIG. 1, longitudinal directions are radial directions of tire 2, lateral directions are axial directions of tire 2, and directions perpendicular to the drawing sheet are circumferential directions of tire 2. Chain line (CL) in FIG. 1 indicates the equatorial plane of tire 2. Tire 2 is substantially symmetrical to the equatorial plane. Tire 2 has tread 4, sidewall 6, bead 8, carcass 10, belt 12 and inner liner 14. Tire 2 is a tubeless pneumatic tire.

Tread 4 is made of a crosslinked rubber and shaped to protrude in a radially outward direction. Tread 4 includes tread surface 16 which makes contact with the ground. Grooves 18 on tread surface 16 form tread patterns. It is an option for tire 2 not to have grooves 18 formed on tread surface 16.

Sidewall 6 extends from the edge of tread 4 in an approximately radially inward direction. Sidewall 6 is made of a crosslinked rubber. Sidewall 6 absorbs impact from the ground by warping. Sidewall 6 prevents damage to carcass 10.

Bead 8 is positioned on the radially inner side of sidewall 6. Bead 8 has core 20. Core 20 is formed in a ring shape. Bead 8 does not include an apex. However, it is an option for bead 8 to have an apex. When bead 8 has an apex, the apex extends from core 20 in a radially outward direction. An apex is made of a crosslinked hard rubber. For example, a sheet-type apex may extend from core 20 in a radially outward direction.

Solid line (BL) in FIG. 1 indicates the bead base line. The bead base line specifies the rim diameter of normal rim 22 on which tire 2 is mounted (see JATMA). The bead base line extends in an axial direction.

Carcass 10 extends along the inner side of tread 4 and sidewall 6 and is bridged between beads 8 on both sides. Carcass 10 is made of carcass ply 24. Carcass ply 24 is wound around bead 8 from the axially inner side to the outer side.

Carcass ply 24 is wound around bead 8 to form main portion (24a) and turn-up portion (24b). Main portion (24a) extends along the inner side of tread 4 and sidewall 6 to bridge one bead 8 and the other bead 8. Turn-up portion (24b) is laminated on the axially outer side of bead 8 and on the outer side of main portion (24a). Radially outer-edge part (24c) of turn-up portion (24b) overlaps belt 12. Outer-edge part (24c) of turn-up portion (24b) is positioned on the inner side of belt 12. Outer-edge part (24c) is sandwiched between main portion (24a) and belt 12.

Although not shown in the drawings, carcass ply 24 is made of carcass cords and a topping rubber. The carcass cords incline relative to the equatorial plane. The absolute value of the inclination angle relative to the equatorial plane is at least 60 degrees but no greater than 90 degrees. In other words, tire 2 is a radial tire. The carcass cords are usually made of organic fibers. Preferred organic fibers are polyester fibers, nylon fibers, rayon fibers, polyethylene naphthalate fibers, and aramid fibers.

Belt 12 is positioned on the radially outer side of carcass 10. Belt 12 is laminated on carcass 10. Edge part (12a) of belt 12 is positioned on the axially outer side of outer-edge part (24c) of carcass ply 24. Edge part (12a) is laminated on outer-edge part (24c). Belt 12 reinforces carcass 10.

Belt 12 is made of cords and a topping rubber, though not shown in the drawings. Cords are wound to be helical. Belt 12 extends substantially in a circumferential direction. The angle of cords relative to the circumferential direction is 5 degrees or less, preferably 2 degrees or less. Cords are made by intertwining multiple steel cords, for example. A steel cord is made by intertwining multiple steel filaments. For example, a steel cord is formed by intertwining three thin steel filaments, and a cord is obtained by intertwining three steel cords. The structure of such a cord is referred to as a so-called 3×3 structure. Those cords are wound in a circumferential direction. Those cords may also be made by using organic fibers. Examples of organic fibers are nylon fibers, polyester fibers, rayon fibers, polyethylene naphthalate fibers and aramid fibers. Also, in belt 12, numerous cords arranged parallel to each other may incline relative to the equatorial plane. The absolute value of the inclination angle is, for example, 10 or greater but 35 degrees or less.

Inner liner 14 is bonded to the internal surface of carcass 10. Inner liner 14 is made of a crosslinked rubber. Inner liner 14 is formed by using a rubber with excellent air impermeability. Inner liner 14 works to maintain the inflation pressure of tire 2.

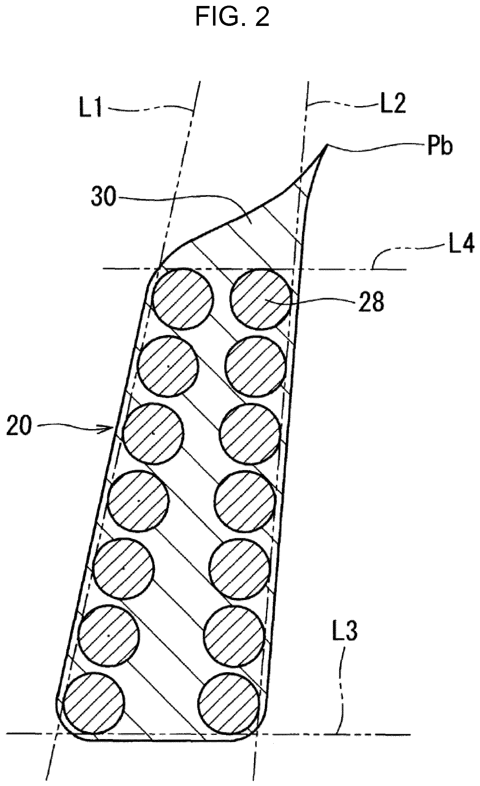

As shown in FIG. 2, bead 8 is formed with core 20 containing wire 28 and crosslinked rubber 30. The number of rows of wire 28 arranged in an axial direction is the number of strands in core 20. The number of strands in core 20 is two. The number of layers of wire 28 arranged in a radial direction is the number of turns in core 20. The number of turns in core 20 is seven.

The number of strands in core 20 is two or more, and the number of turns is at least three times the number of strands in tire 2. Also, core 20 is set to have a radial height that is greater than the axial width. The radial outer edge of wire 28 in core 20 is positioned on the inner side of the radially outer edge of flange 34. Core 20 contributes to enhancing riding comfort.

As shown in FIG. 2, dashed line (L1) is a straight line that passes through the axially innermost side along the axial inner edge of wire 28 arranged in a radial direction. Dashed line (L2) is a straight line that passes through the axially outermost side along the axial outer edge of wire 28 arranged in a radial direction. Dashed line (L3) is a straight line that passes through the radially innermost side along the radially inner edge of wire 28 arranged in an axial direction. Dashed line (L4) is a straight line that passes through the radially outermost side along the radially outer edge of wire 28 arranged in an axial direction.

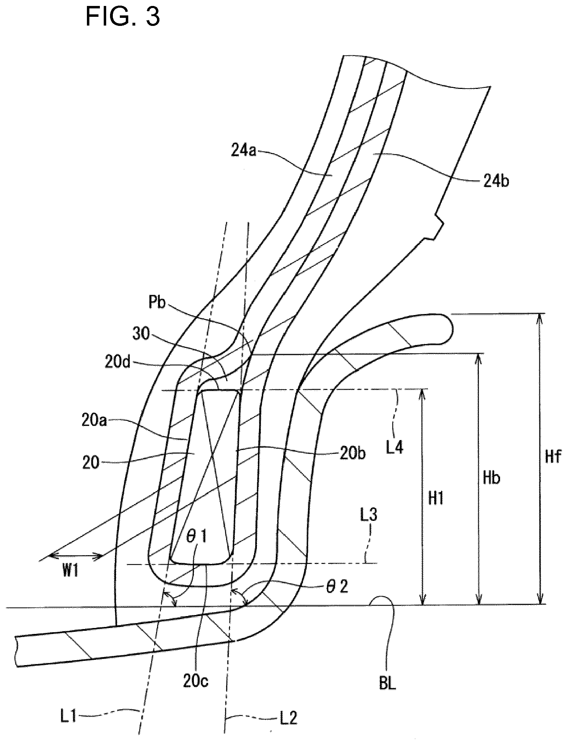

As shown in FIG. 3, straight line (L1) extends along axially inner-side surface (20a) of core 20. Straight line (L2) extends along axially outer-side surface (20b) of core 20. Straight lines (L1) and (L2) incline from the axially inner side to the outer side in a radially outward direction. Straight line (L3) extends along radially lower surface (20c) of core 20, and straight line (L4) extends along radially upper surface (20d) of core 20.

Double-headed arrow (θ1) in FIG. 3 indicates the angle made by the bead base line and straight line (L1). Angle (θ1) is the angle at which the axially inner side of core 20 inclines. Double-headed arrow (θ2) indicates the angle made by the bead base line and straight line (L2). Angle (θ2) is the angle at which the axially outer side of core 20 inclines. Inclination angles (θ1) and (θ2) are each set to be smaller than 90 degrees.

Double-headed arrow (W1) indicates the axial width of core 20. Width (W1) is measured as the distance between straight lines (L1) and (L2). Width (W1) of tire 2 decreases from the radially inner side of core 20 toward the outer side. The region surrounded by straight lines (L1), (L2), (L3) and (L4) is made trapezoidal in tire 2.

As shown in FIG. 3, carcass ply 24 is wound around core 20 from the axially inner side toward the outer side. On the radially outer side of core 20, main portion (24a) and turn-up portion (24b) overlap each other. Crosslinked rubber 30 is surrounded by upper surface (20d) of core 20, main portion (24a) and turn-up portion (24b). Because of crosslinked rubber 30, separation of core 20 and carcass ply 24 is suppressed. Crosslinked rubber 30 is made of the same material as that used for the topping rubber of carcass ply 24. However, crosslinked rubber 30 may be made using different material from that used for the topping rubber of carcass ply 24.

Point (Pb) in FIG. 3 indicates the radially outer edge of bead 8. Bead 8 does not include an apex made of a crosslinked hard rubber.

As shown in FIG. 1, tire 2 is mounted on rim 22. Rim 22 includes base 32 and flange 34. Flange 34 extends from the axially outer edge of base 32 in a radially outward direction. Base 32 has seat surface (32a) that abuts tire 2. Flange 34 has abutting surface (34a) that abuts tire 2.

In FIG. 3, double-headed arrow (H1) indicates the height of core 20. Double-headed arrow (Hb) indicates the height of bead 8. Double-headed arrow (Hf) indicates the height of flange 34 of rim 22. Heights (H1), (Hb) and (Hf) are radial distances measured in a straight line.

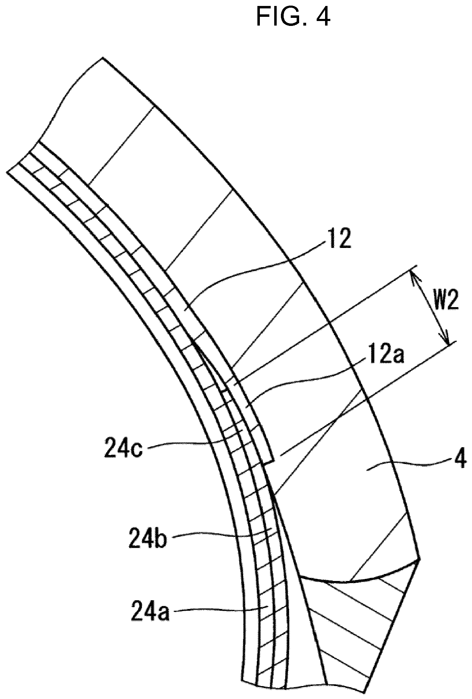

Double-headed arrow (W2) in FIG. 4 indicates the width where edge part (12a) of belt 12 overlaps outer-edge part (24c) of carcass ply 24. Width (W2) is referred to as an overlapping width of edge part (12a) of belt 12 and outer-edge part (24c) of carcass ply 24. Overlapping width (W2) is measured along the surface where edge part (12a) is bonded to outer-edge part (24c).

In tire 2, turn-up portion (24b) of carcass ply 24 overlaps main portion (24a) to reinforce sidewall 6. Carcass ply 24 contributes to enhancing the rigidity of the region from core 20 to edge part (12a) of belt 12. Moreover, outer-edge part (24c) is fixed by edge part (12a) and outer-edge part (24c) which overlap each other. The rigidity of the region from core 20 to edge part (12a) of belt 12 is significantly improved compared with a tire without such a fixed structure.

By combining core 20 and carcass ply 24 structured as above, riding comfort and steering stability of tire 2 are both enhanced. In tire 2, there is no need to provide a reinforcement-rubber layer that extends beyond the radially outer edge of flange 34 in a radially outward direction from core 20. Tire 2 exhibits sufficient rigidity without having a reinforcement layer. The combination of core 20 and carcass 24 contributes to the light weight of tire 2.

In addition, outer-edge part (24c) is positioned on the radially inner side of edge part (12a) in tire 2. Outer-edge part (24c) is sandwiched between main portion (24a) and edge part (12a). Edge part (12a) is secured even more strongly. Carcass ply 24 and belt 12 are integrated with each other. Accordingly, tire 2 exhibits even higher rigidity.

To securely fix outer-edge part (24c) to edge part (12a), overlapping width (W2) between outer-edge part (24c) and edge part (12a) is preferred to be 5 mm or greater. More preferably, overlapping width (W2) is 10 mm or greater, especially preferably 15 mm or greater. On the other hand, if tire 2 has a greater overlapping width (W2), the rigidity of tread 4 increases too much. Overlapping width (W2) is preferred to be 20 mm or less, more preferably 15 mm or less.

Inclination angles (θ1) and (θ2) in tire 2 are each preferred to be 89 degrees or smaller. Core 20 inclines from the axially inner side to the outer side in a radially outward direction. Because of such inclination, warping in sidewall 6 is less likely to be inhibited, and the riding comfort of tire 2 will not decrease. From those viewpoints, inclination angles (θ1) and (θ2) are more preferably 85 degrees or smaller, especially preferably 80 degrees or smaller.

Meanwhile, greater inclination angles (θ1) and (θ2) bring excellent steering stability to tire 2. From such a viewpoint, inclination angles (θ1) and (θ2) are preferred to be 50 degrees or greater, more preferably 55 degrees or greater, especially preferably 60 degrees or greater.

In tire 2, the axial width of core 20 decreases from the radially inner side toward the outer side. In other words, inclination angle (θ1) is set smaller than inclination angle (θ2). Accordingly, the rigidity of core 20 decreases from the radially inner side toward the outer side. Core 20 is far less likely to inhibit warping in sidewall 6. Core 20 contributes to enhancing both steering stability and riding comfort. From those viewpoints, the cross-sectional shape of core 20 is preferred to be trapezoidal. The cross-sectional shape of core 20 here indicates the shape of the region surrounded by straight lines (L1, L2, L3, L4). The cross-sectional shape is the shape of a cross section perpendicular relative to a circumferential direction.

To form a structure where the axial width of core 20 decreases from the radially inner side toward the outer side, the number of strands on the radially inner side of core 20 may be set greater than the number of strands on the radially outer side, for example. Alternatively, the distance between the wires axially adjacent on the radially inner edge of core 20 may be set greater than the distance between the wires axially adjacent on the radially outer edge.

### EXAMPLES

The effects of the present invention are made evident by the examples below. However, it should be understood that the present invention is not limited to the descriptions of the examples below.

### [Example 1]

A tire was prepared to have the structure shown in FIG. 1. Overlapping width (W2), core height (H1) and inclination angles (θ1, θ2) of the tire are specified in Table 1. The tire size was "180/55ZR17."

### [Comparative Example 1]

The turn-up edge of the carcass ply did not extend to the edge part of the belt, but was laminated on the main portion of the carcass ply. Inclination angles (θ1, θ2) were specified as shown in Table 1. The rest of the tire was set the same as in Example 1.

### [Examples 2-3]

Tires were each prepared the same as in Example 1 except that inclination angles (θ1, θ2) were specified as shown in Table 1.

### [Examples 4 and 6]

Tires were each prepared the same as in Example 1 except that overlapping width (W2) and inclination angles (θ1, θ2) were specified as shown in Tables 1 and 2 respectively.

### [Example 5 and Comparative Example 2]

Tires were each prepared the same as in Example 1 except that height (H1) and inclination angles (θ1, θ2) were specified as shown in Table 2.

### [Comparative Example 3]

The tire was prepared the same as in Comparative Example 1 except that height (H1) was specified as shown in Table 2.

### [Riding Comfort]

Each tire was mounted on a rim with a size of 17M/C×MT5.50, and air was filled in the tire at an inflation pressure of 290 kPa. The flange height (Hf) of the rim was 15 mm. A load of 1.3 kN was exerted on the tire. When the tire was driven over a bump (5×5 mm), the reaction force and the time until the tire was restored to its normal state were measured. The results are shown in Tables 1 and 2 as indices. The indices are shown as the value obtained in Comparative Example 1 being set as a base value of 3.0. The greater the value is, the better the evaluation result is.

### [Steering Stability]

Each tire was mounted on a rim with a size of 17M/C×MT5.50, and air was filled in the tire at an inflation pressure of 290 kPa. The rim is the same as that used for evaluation of riding comfort. Each tire was mounted on a commercially available motorcycle with a displacement of 1300 cm³ (cc). A rider ran the motorcycle on a racing circuit and evaluated steering stability. The results are shown in Tables 1 and 2 as indices. The indices are shown as the value obtained in Comparative Example 1 being set as a base value of 100. The greater the value is, the better the evaluation result is.

**Table 1 Evaluation Results**

| | Comp. Example 1 | Example 2 | Example 1 | Example 3 | Example 6 |
|---|---|---|---|---|---|
| Overlapping width W2 (mm) | none | 15 | 15 | 15 | 20 |
| Core height H1 (mm) | 11 | 11 | 11 | 11 | 11 |
| Inclination angle θ1 (°) | 90 | 60 | 60 | 85 | 85 |
| Inclination angle θ2 (°) | 90 | 60 | 70 | 85 | 85 |
| Riding comfort | 100 | 110 | 115 | 105 | 105 |
| Steering stability | 3.0 | 3.5 | 5.0 | 4.0 | 3.5 |

**Table 2 Evaluation Results**

| | Example 4 | Example 5 | Comp. Example 2 | Comp. Example 3 |
|---|---|---|---|---|
| Overlapping width W2 (mm) | 5 | 15 | 15 | none |
| Core height H1 (mm) | 11 | 14 | 15 | 15 |
| Inclination angle θ1 (°) | 85 | 85 | 85 | 90 |
| Inclination angle θ2 (°) | 85 | 85 | 85 | 90 |
| Riding comfort | 110 | 105 | 85 | 90 |
| Steering stability | 3.5 | 4.5 | 3.0 | 2.5 |

As shown in Tables 1 and 2, tires in the examples show higher evaluation results than tires in the comparative examples. The excellence of the present invention is evident from those evaluation results.

### INDUSTRIAL APPLICABILITY

The structures described above are not limited to tires for motorcycles, but can be employed in any pneumatic tire having a carcass, belt and core.

To provide a pneumatic tire that exhibits excellent steering stability and riding comfort

Carcass ply 24 of tire 2 is provided with main portion (24a) bridging one bead 8 to the other bead 8 and with turn-up portion (24b) positioned on the axially outer side of each bead 8 to extend in a radially outward direction. Beads 8 each have core 20 which includes a wire extending in a circumferential direction. The number of strands in core 20 is two or greater. The number of turns is at least three times the number of strands in core 20. When tire 2 is mounted on normal rim 22, the radially outer edge of the wire is positioned on the radially inner side of the radially outer edge of flange 34 of rim 22. Outer-edge part (24c) of turn-up portion (24b) overlaps edge part (12a) of belt 12.

### DESCRIPTION OF NUMERICAL REFERENCES

- 2: tire
- 4: tread
- 6: sidewall
- 10: carcass
- 12: belt
- 14: inner liner
- 16: tread surface
- 18: groove
- 20: core
- 22: rim
- 24: carcass ply
- 28: wire
- 30: crosslinked rubber
- 32: base
- 34: flange

## Claims

1. A pneumatic tire, comprising:
a pair of beads (8, 8);
a carcass (10); and
a belt (12),
wherein the carcass (10) comprises a carcass ply (24),
the carcass ply (24) is turned up around each bead from the axially inner side toward the outer side,
the turn-up structure forms a main portion bridging one bead (8) to the other bead (8) and turn-up portions (24, 24) positioned on the axially outer side of the respective beads (8, 8) to extend in a radially outward direction,
the beads (8, 8) each include a core (20) comprising a wire (28) that extends in a circumferential direction,
the number of strands in the core (20) being the number of rows of wire (28) arranged in the axial direction is at least two,
the number of turns being the number of layers of wire (28) arranged in the radial direction is at least three times the number of the strands in the core (20), and,
when the tire is mounted on a normal rim, the radially outer edge of the wire (28) is positioned on the radially inner side of the radially outer edge of the flange of a normal rim,
**characterized in that**
the outer-edge part (24c) of the turn-up portion (24b) overlaps the edge part (12a) of the belt (12),
wherein the distance between wires (28) axially adjacent to each other at the radially inner edge of the core (20) is greater than the distance between wires (28) axially adjacent to each other at the radially outer edge of the core (20).

2. A pneumatic tire, wherein the outer-edge part (24c) of the turn-up portion (24b) is positioned on the radially inner side of the edge part (12a) of the belt (12).

3. The pneumatic tire according to Claim 1 or 2, wherein the width where the outer-edge part (24c) of the turn-up portion overlaps the edge part of the belt (12) is at least 5 mm but no greater than 20 mm.

4. The pneumatic tire according to any of Claims 1 through 3, wherein the inclination angle (θ1) of the core (20) on its axially inner side and the inclination angle (θ2) of the core (20) on its axially outer side are each at least 50 degrees but no greater than 89 degrees with respect to an axial center line of the tire in a cross section perpendicular with respect to a circumferential direction.

5. The pneumatic tire according to any of Claims 1 through 4, wherein the axial width of the core (20) decreases from the radially inner side toward the outer side.

6. The pneumatic tire according to any of Claims 1 through 5, wherein the shape of the core (20) on a cross section perpendicular with respect to a circumferential direction is trapezoidal.

7. The pneumatic tire according to any of Claims 1 through 6, wherein the number of strands on the radially inner side of the core (20) is set greater than the number of strands on the radially outer side of the core (20).

8. The pneumatic tire according to any of Claims 1 through 7, wherein when the tire is mounted on a normal rim, the tire does not comprise a reinforcement-rubber layer that extends beyond the radially outer edge of the flange of the normal rim in a radially outward direction from the core (20).

9. The pneumatic tire according to any of Claims 1 through 8, wherein a number of rows of wire (28) arranged in an axial direction is the number of strands in core (20) in its cross-section.

10. The pneumatic tire according to any of Claims 1 through 9, wherein the core (20) is set to have a radial height that is greater than the axial width.

11. The pneumatic tire according to any of Claims 1 through 10, wherein inclination angles of the axially inner side face of the core (θ1) and of the axially outer side face of the core (θ2) are each set to be smaller than 90 degrees with respect to the axial center line of the tire, more preferably 85 degrees or smaller, especially preferably 80 degrees or smaller.

12. The pneumatic tire according to any of Claims 1 through 11, wherein inclination angles of the axially inner side face of the core (θ1) and of the axially outer side face of the core (θ2) are each set to be greater than 50 degrees with respect to the axial center line of the tire, more preferably 55 degrees or greater, especially preferably 60 degrees or greater.

13. The pneumatic tire according to Claim 11 or Claim 12, wherein the inclination angle (θ1) is 60 degree and the inclination angle (θ2) is 70 degree.

14. The pneumatic tire according to any of Claims 1 through 13, wherein turn-up portion (24b) of carcass ply (24) overlaps main portion (24a) to reinforce a sidewall (6).

## Patentansprüche

1. Luftreifen, der Folgendes aufweist:
ein Paar von Wülsten (8, 8);
eine Karkasse (10); und
einen Gurt (12),
wobei die Karkasse ein Karkassengewebe (24) aufweist,
das Karkassengewebe (24) um jede Wulst herum von der axial inneren Seite zu der äußeren Seite hin umgeschlagen ist,
die umgeschlagene Struktur einen Hauptabschnitt, der eine Wulst (8) zu der anderen Wulst (8) hin überbrückt, und umgeschlagene Abschnitte (24, 24) ausbildet, die auf der axial äußeren Seite der entsprechenden Wülste (8, 8) positioniert sind, um sich in einer radial auswärts gerichteten Richtung zu erstrecken,
die Wülste (8, 8) jeweils einen Kern (20) mit einem Draht (28) aufweisen, der sich in einer Umfangsrichtung erstreckt,
die Anzahl von Litzen in dem Kern (20), die die Anzahl von Reihen des Drahts (28) sind, die in der axialen Richtung angeordnet sind, zumindest zwei ist,
die Anzahl von Wicklungen, die die Anzahl von Schichten des Drahts (28) ist, die in der radialen Richtung angeordnet sind, zumindest drei mal die Anzahl der Litzen in dem Kern (20) ist, und
dann, wenn der Reifen auf einer normalen Felge montiert ist, der radial äußere Rand des Drahts (28) auf der radial inneren Seite des radial äußeren Rands des Flansches einer normalen Felge positioniert ist, **dadurch gekennzeichnet, dass**
der äußere Randteil (24c) des umgeschlagenen Abschnitts (24b) den Randteil (12a) des Gurts (12) überlappt,
wobei der Abstand zwischen Drähten (28), die axial benachbart zueinander an dem radial inneren Rand des Kerns (20) sind, größer ist als der Abstand zwischen Drähten (28), die axial benachbart zueinander an dem radial äußeren Rand des Kerns (20) sind.

2. Luftreifen, wobei der äußere Randteil (24c) des umgeschlagenen Abschnitts (24b) auf der radial inneren Seite des Randteils (12a) des Gurts (12) positioniert ist.

3. Luftreifen nach Anspruch 1 oder 2, wobei die Breite, bei der der äußere Randteil (24c) des umgeschlagenen Abschnitts den Randteil des Gurts (12) überlappt, zumindest 5 mm, aber nicht größer als 20 mm ist.

4. Luftreifen nach einem von Ansprüchen 1 bis 3, wobei der Neigungswinkel (θ1) des Kerns (20) auf dessen axial innerer Seite und der Neigungswinkel (θ2) des Kerns (20) auf dessen axial äußerer Seite jeweils zumindest 50 Grad, aber nicht größer als 89 Grad hinsichtlich einer axialen Mittellinie des Reifens in einem Querschnitt senkrecht hinsichtlich einer Umfangsrichtung sind.

5. Luftreifen nach einem von Ansprüchen 1 bis 4, wobei sich die axiale Breite des Kerns (20) von der radial inneren Seite zu der äußeren Seite hin verringert.

6. Luftreifen nach einem von Ansprüchen 1 bis 5, wobei die Form des Kerns (20) an einem Querschnitt senkrecht hinsichtlich einer Umfangsrichtung trapezförmig ist.

7. Luftreifen nach einem von Ansprüchen 1 bis 6, wobei die Anzahl von Litzen auf der radial inneren Seite des Kerns (20) größer eingestellt ist als die Anzahl von Litzen auf der radial äußeren Seite des Kerns (20).

8. Luftreifen nach einem von Ansprüchen 1 bis 7, wobei dann, wenn der Reifen auf einer normalen Felge montiert ist, der Reifen keine Verstärkungsgummischicht aufweist, die sich über den radial äußeren Rand des Flansches der normalen Felge in einer radial auswärts gerichteten Richtung von dem Kern (20) hinaus erstreckt.

9. Luftreifen nach einem von Ansprüchen 1 bis 8, wobei eine Anzahl von Reihen eines Drahts (28), die in einer axialen Richtung angeordnet sind, die Anzahl von Litzen in dem Kern (20) in dessen Querschnitt ist.

10. Luftreifen nach einem von Ansprüchen 1 bis 9, wobei der Kern (20) eingestellt ist, um eine radiale Höhe zu haben, die größer als die axiale Breite ist.

11. Luftreifen nach einem von Ansprüchen 1 bis 10, wobei Neigungswinkel der axial inneren Seitenfläche des Kerns (θ1) und der axial äußeren Seitenfläche des Kerns (θ2) jeweils eingestellt sind, um kleiner als 90 Grad hinsichtlich der axialen Mittellinie des Reifens, noch wünschenswerter 85 Grad oder kleiner, besonders wünschenswert 80 Grad oder kleiner zu sein.

12. Luftreifen nach einem von Ansprüchen 1 bis 11, wobei Neigungswinkel der axial inneren Seitenfläche des Kerns (θ1) und der axial äußeren Seitenfläche des Kerns (θ2) jeweils eingestellt sind, um größer als 50 Grad hinsichtlich der axialen Mittellinie des Reifens, noch wünschenswerter 55 Grad oder größer, besonders wünschenswert 60 Grad oder größer zu sein.

13. Luftreifen nach Anspruch 11 oder 12, wobei der Neigungswinkel (θ1) 60 Grad ist, und der Neigungswinkel (θ2) 70 Grad ist.

14. Luftreifen nach einem von Ansprüchen 1 bis 13, wobei der umgeschlagene Abschnitt (24b) des Karkassengewebes (24) den Hauptabschnitt (24a) überlappt, um eine Seitenwand (6) zu verstärken.

## Revendications

1. Pneumatique, comprenant :
une paire de bourrelets (8, 8) ;
une carcasse (10) ; et
une ceinture (12),
dans lequel la carcasse (10) comprend un pli de carcasse (24),
le pli de carcasse (24) est enroulé autour de chaque bourrelet, du côté axialement intérieur vers le côté extérieur,
la structure enroulée forme une partie principale qui amène un bourrelet (8) jusqu'à l'autre bourrelet (8) et des parties enroulées (24, 24) positionnées sur le côté axialement extérieur des bourrelets respectifs (8, 8) afin de s'étendre dans une direction radialement extérieure,
les bourrelets (8, 8) comprennent chacun un noyau (20) comprenant un fil (28) qui s'étend dans une direction circonférentielle,
le nombre de brins dans le noyau (20) qui est le nombre de rangées de fils (28) disposées dans la direction axiale est d'au moins deux,
le nombre de tours qui est le nombre de couches de fils (28) disposées dans la direction radiale est égal à au moins trois fois le nombre de brins dans le noyau (20), et,
lorsque le pneumatique est monté sur une jante normale, le bord radialement extérieur du fil (28) est positionné sur le côté radialement intérieur du bord radialement extérieur du rebord d'une jante normale,
**caractérisé en ce que**
la partie de bord extérieur (24c) de la partie enroulée (24b) chevauche la partie de bord (12a) de la ceinture (12),
dans lequel la distance entre les fils (28) axialement adjacents les uns aux autres au niveau du bord radialement intérieur du noyau (20) est supérieure à la distance entre les fils (28) axialement adjacents les uns aux autres au niveau du bord radialement extérieur du noyau (20).

2. Pneumatique, dans lequel la partie de bord extérieur (24c) de la partie enroulée (24b) est positionnée sur le côté radialement intérieur de la partie de bord (12a) de la ceinture (12).

3. Pneumatique selon la revendication 1 ou 2, dans lequel la largeur sur laquelle la partie de bord extérieur (24c) de la partie enroulée chevauche la partie de bord de la ceinture (12) est d'au moins 5 mm, mais non supérieure à 20 mm.

4. Pneumatique selon l'une quelconque des revendications 1 à 3, dans lequel l'angle d'inclinaison (θ1) du noyau (20) sur son côté axialement intérieur et l'angle d'inclinaison (θ2) du noyau (20) sur son côté axialement extérieur sont chacun d'au moins 50 degrés mais non supérieurs à 89 degrés par rapport à une ligne centrale axiale du pneumatique sur une section transversale perpendiculaire à une direction circonférentielle.

5. Pneumatique selon l'une quelconque des revendications 1 à 4, dans lequel la largeur axiale du noyau (20) diminue du côté radialement intérieur vers le côté extérieur.

6. Pneumatique selon l'une quelconque des revendications 1 à 5, dans lequel la forme du noyau (20) sur une section transversale perpendiculaire à une direction circonférentielle est trapézoïdale.

7. Pneumatique selon l'une quelconque des revendications 1 à 6, dans lequel le nombre de brins sur le côté radialement intérieur du noyau (20) est supérieur au nombre de brins sur le côté radialement extérieur du noyau (20).

8. Pneumatique selon l'une quelconque des revendications 1 à 7, dans lequel, lorsque le pneumatique est monté sur une jante normale, le pneumatique ne comprend pas de couche de caoutchouc de renfort qui s'étend au-delà du bord radialement extérieur du rebord de la jante normale dans une direction radialement extérieure depuis le noyau (20).

9. Pneumatique selon l'une quelconque des revendications 1 à 8, dans lequel un nombre de rangées de fils (28) disposées dans une direction axiale est le nombre de brins dans le noyau (20) dans sa section transversale.

10. Pneumatique selon l'une quelconque des revendications 1 à 9, dans lequel le noyau (20) est défini pour avoir une hauteur radiale supérieure à la largeur axiale.

11. Pneumatique selon l'une quelconque des revendications 1 à 10, dans lequel les angles d'inclinaison de la face côté axialement intérieur du noyau (θ1) et de la face côté axialement extérieur du noyau (θ2) sont chacun définis comme étant inférieurs à 90 degrés par rapport à la ligne centrale axiale du pneumatique, plus préférentiellement 85 degrés ou moins, en particulier de préférence 80 degrés ou moins.

12. Pneumatique selon l'une quelconque des revendications 1 à 11, dans lequel les angles d'inclinaison de la face côté axialement intérieur du noyau (θ1) et de la face côté axialement extérieur du noyau (θ2) sont chacun définis comme étant supérieurs à 50 degrés par rapport à la ligne centrale axiale du pneumatique, plus préférentiellement 55 degrés ou plus, en particulier de préférence 60 degrés ou plus.

13. Pneumatique selon la revendication 11 ou la revendication 12, dans lequel l'angle d'inclinaison (θ1) est de 60 degrés et l'angle d'inclinaison (θ2) est de 70 degrés.

14. Pneumatique selon l'une quelconque des revendications 1 à 13, dans lequel la partie enroulée (24b) du pli de carcasse (24) chevauche la partie principale (24a) afin de renforcer une paroi latérale (6).
